# EUROPEAN PATENT SPECIFICATION

(11) **EP 2 014 152 B1**
(45) Date of publication and mention of the grant of the patent: **24.10.2012**
(21) Application number: 08159982.1
(22) Date of filing: 09.07.2008
(51) Int. Cl.: A01G 9/02

(54) **Flower pot and method of forming a flower pot**
Blumentopf und Verfahren zur Bildung eines Blumentopfes
Pot de fleur et procédé de formation d'un pot de fleur

(30) Priority: 09.07.2007 NL 1034113
(43) Date of publication of application: 14.01.2009
(73) Proprietor: Modiform B.V., 3831 KA Leusden (NL)
(72) Inventor: van Heugten, Petrus Johannes, 3791 PK Achterveld (NL)
(74) Representative: Hatzmann, Martin

(56) References cited:
- WO-A-98/23143
- DE-U1- 20 119 165
- NL-A- 8 105 726
- NL-C1- 1 000 939
- US-A- 4 715 144

## Description

The invention relates to a flower pot which is manufactured at least partly from plastic, and which is provided with at least one upstanding wall and a bottom, wherein the bottom is provided with at least one rib, wherein the at least one rib extends over a center part of the bottom.

The invention further relates to a method of forming such a flower pot, wherein the pot is deep-drawn, and wherein a rib is formed over a center part of the bottom of the pot.

A known flower pot is, for instance, a deep-drawn plastic flower pot, where multiple air openings are provided in the bottom for allowing air to pass to the potting soil and/or the roots of the plant or flower. The bottom may be provided with a relief so that a part of the bottom is raised from the ground. As a result, air can flow under the pot and through the air openings more easily

An exemplary flower pot of the known kind is described by US 4,715, 144 (Lee), which discloses a plant container, the sidewalls of which substantially consist of concavoconvex ribs that are concave on the inside wall and convex on the outside wall. Additionally, the bottom of the plant container contains one of more channels, a back portion of which may form a rib that extends radially across the inside bottom wall of the plant container.

It has been found that, with the known pot, the bottom often loses relief or at least does not retain its shape. With the passage of time, the bottom at least partly sags. As a result of this, it may, for instance, happen that too little air can flow near or through the air openings and/or that moisture flows through more difficultly.

In a first aspect, the rib that extends over a center part of the bottom has a curve over the length of the rib in the direction of the opening of the pot, so that the two ends of the rib are lower than a center part thereof.

A flower pot according to the invention is at least understood to mean a pot or tray for flowers, plants, cuttings, roots, seeds, etc. Different pots may be interconnected. The center part of the bottom of the pot may, for instance, comprise a part of the bottom extending around the center of the bottom, for instance up to about half the radius of the bottom, preferably up to about a quarter of the radius of the bottom, or a part extending symmetrically around a center, having a surface area of about half, more in particular about a quarter, more in particular about one ninth of the total surface area of the bottom.

It has been found that, by use of a curved rib over a center part of the bottom, the bottom stiffens such that, upon filling the pot, the bottom retains its shape and does virtually not sag. In this specification, a rib according to the invention may, for instance, be understood to means at least one longitudinally shaped recess and/or elevation in the bottom. The rib then preferably keeps the center part of the bottom up and/or maintains a bottom relief.

In one embodiment, there are openings in the bottom, which openings preferably extends at different height levels and/or at least above relatively low-lying supporting parts of the bottom. The openings allow gas, moisture and/or nutrients through. Because parts of the bottom arranged above the points of supports stay up, gas, moist and/or nutrients can flow more easily through these holes.

In one embodiment, the flower pot is deep-drawn. In this embodiment, for instance, the curved rib does not form a solid rib but a sort of channel in the bottom. It has been found that, in particular, one preferably relatively wide rib, extending over the center part, can bring about an intended stiffening of the bottom and that this causes no or little risk of breaking of the bottom. This risk would be expected in deep-drawing. Especially when the rib extends up to the wall(s) of the pot, the rib has a support function, a very advantageous stiffening being provided when the rib has a curve, so that the two ends thereof are lower than a center part thereof.

In a second aspect, a method of forming a flower part is provided, wherein the pot is deep-drawn, and wherein, in deep-drawing, a rib is formed over a center part of the bottom of the pot, which the rib has a curve over the length of the rib in the direction of the opening of the pot, so that the two ends of the rib are lower than a center part thereof.

Further advantageous and features of the present invention follow from the following description, in which the invention is described in more detail in multiple exemplary embodiments with reference to the appended drawings, in which:
Fig. 1 shows a flower pot in perspective bottom view;
Fig. 2 shows a flower pot in a second perspective view;
Fig. 3 shows a schematic representation of a flower pot bottom in bottom view;
Fig. 4 is a flower pot in perspective view;
Figs. 5A and 5B are two perspective views of a plug tray;
Fig. 6 shows a detailed view of a plug holder;
Fig. 7 shows a schematic top plan view of an insert opening; and
Fig. 8 shows a schematic top plan view of multiple plug trays.

In this description, same or corresponding parts have some or corresponding reference numerals. In the drawing, embodiments are merely shown by way of example. The elements used therein are only mentioned by way of example and should not be taken as being limitative in any way. Other parts may also be used within the framework of the present invention. The proportions of the embodiments shown in the Figures are, in some cases, shown schematically and/or exaggeratedly and should not be taken as being limitative. Dimensions are intended to be merely illustrative as well and should not be taken as being limitative, unless expressly stated otherwise.

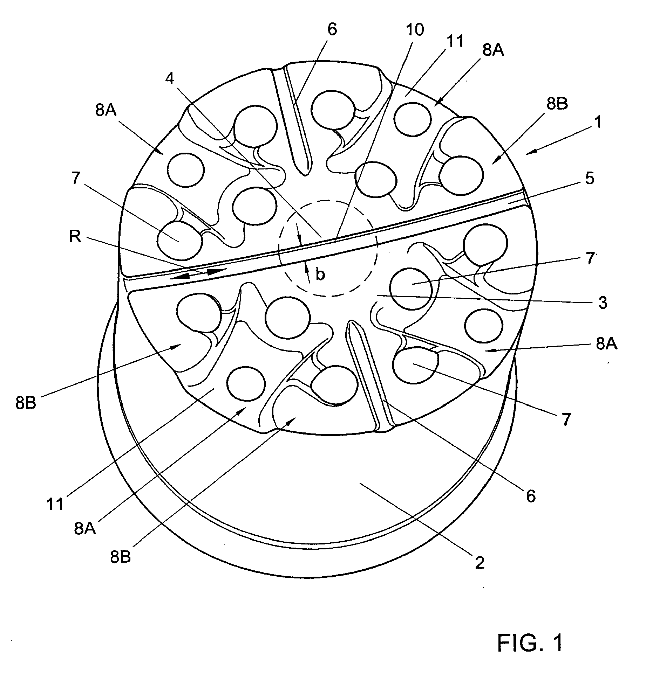

Fig. 1 shows a flower pot 1 which is manufactured, preferably deep-drawn, at least partly from plastic. The material contains, for instance, PP (polypropylene) and is somewhat flexible. The flower pot is provided with an upstanding wall 2 and a bottom 3, while the bottom 3 is provided with one rib 5 extending substantially in one direction R over a center part 4 of the bottom. The center part 4 comprises the part of the bottom 3 extending around the center 10, for instance up to about half, preferably up to about a quarter of the radius R of the bottom 3. The center part 4 may also be the part extending symmetrically around the center 10 over at least about half, in particular a quarter, more in particular one ninth of the total surface area of the bottom 3. In a preferred embodiment, the rib 5 extends through the center 10 of the bottom 3. It is also conceivable that, for instance, two or more ribs 5 are provided which extend near the center 10, for instance parallel to one another. This latter embodiment can be understood as at least one rib 5, or at least a collection of ribs 5, extending through the center 10. In the embodiment shown in Fig. 1, it can be seen that, in addition, two short second ribs 6 may be provided near the sides of the bottom 3, which second ribs 6 do not reach up to the center part 4, yet may also contribute to some stiffening near the sides.

The rib 5 provides a stiffening of the bottom 3, so that the bottom does not sag, or at least retains its shape sufficiently when the pot 1 is placed with the bottom 3 down and is filled with potting soil. An explanation for the stiffening of the bottom could be that, in deep-drawing, extra stress is created in the material of the bottom by the preferably relatively wide rib, so that the material loses some elasticity and thus becomes stiffer. For instance, the rib 5 is at least about 5 mm wide with a length, width and/or diameter of the bottom 3 of about 130 mm. Per embodiment, the width of the rib 5 may increase or decrease, for instance depending on the length, width and/or diameter of the bottom 3 of the pot 1 and/or the number of ribs 5 used.

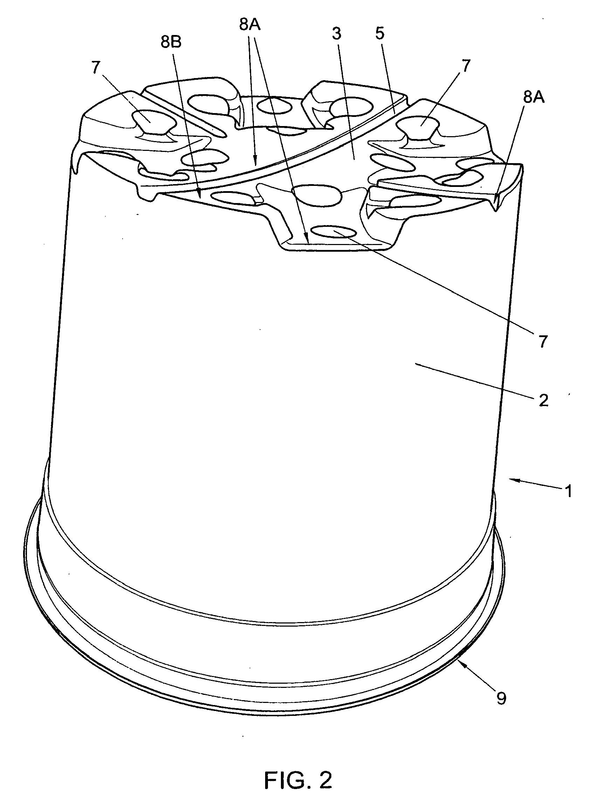

It is advantageous if air, or at least gas and/or moisture and/or nutrients can be fed through openings 7 in the bottom 3. In order to feed these gases, moisture and/or substances between the bottom 3 and a ground, for instance a table surface, along the bottom 3 and the openings 7, the bottom 3 is provided with multiple height levels 8A, 8B, at least a relief (see also Fig. 2), where the openings 7 are preferably at at least first height level 8A which will extend at a distance from the ground, i.e. above supporting parts of the bottom 3, in standing condition of the pot 1. The supporting parts of the bottom 3 are, for instance, at a second height level 8B, which level 8B will rest on the ground, for instance across a table surface, in a standing condition of the pot 1. The openings 7 may, for instance, be at mutually different height levels 8A and are preferably at least partly above the second height level 8B. In the embodiment shown, for instance, one or more incisions 11 are provided up to a first height level 8A, along which gas and/or moisture can flow when the pot 1 rests on a flat surface with the bottom 3. Here, an incision 11 is, for instance, provided with openings 7. The rib 5 ensures that above-mentioned different height levels 8A, 8B are maintained sufficiently with respect to one another, so that a desired gas, moisture and/or nutrient feed-through can be maintained. Also, due to the rib 5, optionally, thinner material can be used for a pot 1 than for a similar pot without such a rib with similar load-bearing capacity of the bottom 3.

It is advantageous when the rib 5 has a curve over the length of the rib 5, while the curve is convex in the direction of the pot opening 9, so that the highest point of the curve is in the center part 4 of the bottom. Such a curve contributes to a favorable stiffening of the bottom 3. This also allows a center part 4 to be kept up in favorable manner, while the center part 4 may also have curve.

Preferably, the rib 5 extends virtually over the whole bottom 3 up to the wall 2, at least from wall 2 to wall 2, while, preferably, the ends of the rib 5 end up in the wall 2. This contributes to the stiffening of the rib 5, and consequently the bottom 3 and improves the supporting function of the bottom 3.

As can be seen, second ribs 6 may be provided near the sides of the bottom 3. These contribute to somewhat keeping up the bottom 3 locally. Also, due to the local height difference at the location of these two ribs 6 at the side, a gas and/or moisture passage will be formed there. An extra stiffness of the rib 5 through the center part 4 according to the invention is achieved if this rib 5 is free of crossing second ribs, since, with use of extra ribs crossing the rib 5, the stiffness of the bottom 3 could still be reduced. It is therefore advantageous when the rib 5 is substantially one rib 5, which extends substantially as only rib 5 in above-mentioned one direction R.

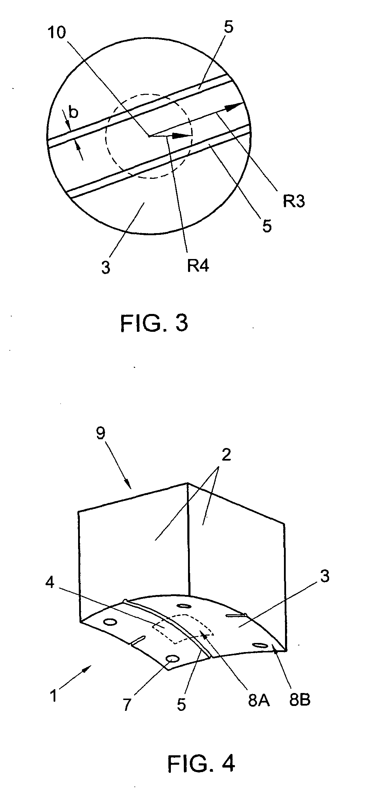

The same advantages as with one rib 5 could optionally also be achieved by using a few free ribs 5, for instance approximately parallel to one another with a small distance therebetween, while these multiple ribs 5 extend through the center part 4, see for instance the bottom view of such a bottom 3 in Fig. 3. In another embodiment, the multiple ribs 5 are, for instance, somewhat integrated, i.e. continuous and/or with little or no distance therebetween. The collection of ribs 5 will, in principle, extend through the center part 4. The center part 4 is, for instance, but not exclusively, the part of the bottom 3 extending around the center 10 with a radius R₄, which radius R₄ is half the radius R₃ of the bottom 3 (see Fig. 3).

The at least one rib 5 preferably has a channel shape. This channel shape is, for instance, created by deep-drawing the pot 1. On the one hand, the channel shape sufficiently contributes to stiffening the pot 1, which a solid rib could also bring about, however, and can, in addition, act as a gas and/or moisture feed-through and, in addition, facilitates the deep-drawing, as opposed to a solid rib.

One embodiment of the pot 1 has only one center part-crossing rib 5. Preferably, the rib 5 is relatively wide. In a pot bottom 3 having a diameter of about 130 mm, the width b of the rib 5 is, for instance, at least about 5 mm, or for instance 3 mm or more. With multiple ribs 5, the width 5 could, for instance, be chosen to be somewhat smaller than with use of one rib 5.

The pot 1 may be manufactured from PP or a different plastic. PP particularly has the advantage that it is suitable for sustained and multiple use, also due to the relatively tough and somewhat elastic properties. Without the stiffening according to the invention, however, this may also entail the drawback that, as said, the bottom 3 of the pot 1 sags. In particular with plastic which is somewhat elastic and/or not stiff such as PP, however, the rib 5 still ensures sufficient stiffening of this plastic and/or even ensures relatively heavy loads are kept up, for instance one to a few liters of potting soil.

The flower pot 1 is preferably deep-drawn. In deep-drawing, the rib 5 is formed so that it extends through a center part 4 of the bottom 3 of the pot 1. To this end, the part of the mold which is in the pot 1 during manufacturing is provided with a channel, at least as many channels as ribs 5. Possibly, the stress created in the bottom 3 in deep-drawing will contribute to the stiffness of the bottom, in addition to the stiffness provided by use of the rib 5 itself.

In particular embodiments, the pots 1 are, for instance, shaped to be rectangular or otherwise, at least in top plan view. One example of a rectangular pot 1 according to the invention is shown in Fig. 4. The pots 1 may or may not be provided with gas and/or moisture holes 7 and with different height levels 8A, 8B in the bottom 3 for the purpose of a gas and/or moisture passage under the bottom 3, while the pots 1 are preferably manufactured by means of deep-drawing. After or during deep-drawing, the openings 7 are formed, preferably at different height levels 8A, 8B, for instance by means of punching or otherwise cutting into the bottom. Here as well, a center part 4 is, for instance, the part extending symmetrically around the center 10 over at least about half, in particular a quarter, more in particular one ninth of the total surface area of the bottom 3, and a rib 5 will extend through this center part 4. Also, for instance, multiple pots 1 may be integrated, at least connected, with one another.

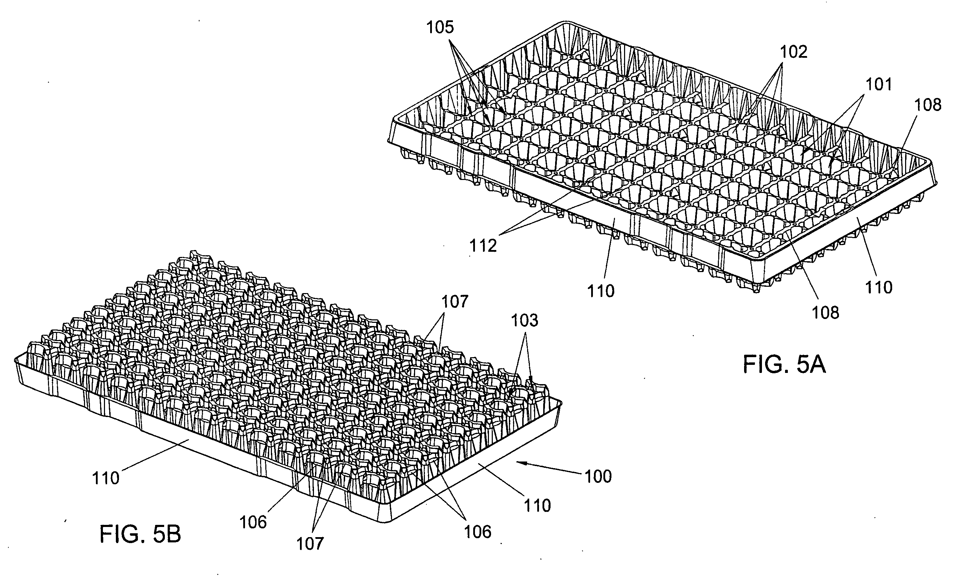

One embodiment of a flower pot which also has favorable gas, nutrient and/or moisture passages is shown in Figs. 5A and 5B. This embodiment involves, for instance, a plug tray 100 adapted compared to the prior art, and can be considered separately.

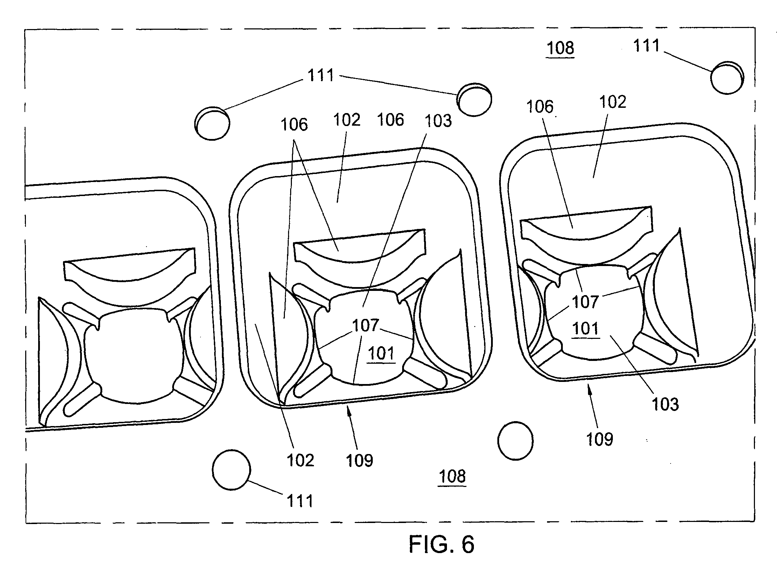

A plug tray 100 involves a tray provided with multiple holders 101 for plugs 104, for instance between an outer edge 110. Plugs 104 are known to a skilled person as holders for at least flowers, plants, roots, cuttings and the like. The plug tray 100 is at least for the greater part manufactured from plastic, preferably PS (polystyrene), and is preferably manufactured by means of deep-drawing. The plug holders 101 are provided with walls 102 with an insert opening 109 for inserting a plug 104 between the walls 102 (see Fig. 6). A plug holder 101 may also be shaped to be round or oval-shaped and is then, for instance, provided with one wall 102. The holder 101 is further provided with at least one opening 103 for operatively allowing gases and/or moisture to pass under the plug 104.

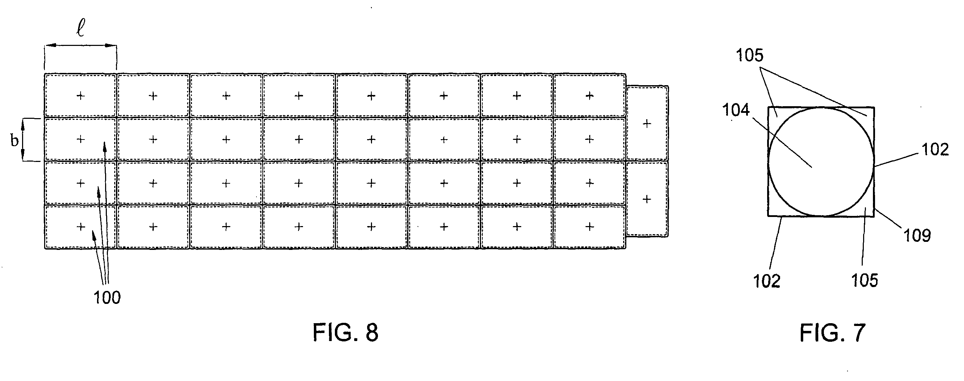

Multiple preferably filled plug trays 100 can be placed next to and above another in racks so that, in an efficient manner, the respective plants and/or flowers can grow in the plugs 104. In Fig. 8, by way of illustration, a configuration of multiple plug trays 100 next to one another is shown. A plug tray 100 has, for instance but not exclusively, a width b of about 300 mm and a length 1 of about 500 mm.

In one embodiment, the insert opening 109, or the walls 102, or the wall 102, of the plug holder 101 is/are arranged to engage the plug 104 while space 105 is left free for at least sufficient circulation of gases and/or moisture along the plug 104, preferably so that gases can flow relatively simply through the at least one gas and/or moisture opening 103 and along the plugs 104 (see Fig. 7). The insert opening 109 may, for instance, be arranged to substantially oval, square or with separate engaging elements 112 to engage the plug 104 while air can flow along the plug 104.

In still another embodiment, the walls 102 are provided with cams 106, with which the plug 104 can be supported, see for instance Fig. 5B or 6, in particular so that gases and/or moisture can flow under the plug 104, and/or so that a bottom of the holder 101 is kept free of the plug 104. In order to promote above-mentioned circulation, it is advantageous when the edge 107 of the respective opening 103 does not extend over a flat surface, and/or is not parallel to edges 108 of the insert openings 109 of the holders 101. As a result, a part of the lower edge 107 will be able to be supported on a ground, for instance a flat table surface, while another part of the edge 107 leaves space free between the wall 102 and the ground so that gas and/or moisture is allowed to flow through. In addition, such a design of the opening 103 prevents, for instance, water films from being created between the holders 101 and the ground so that circulation of gas and/or moisture could be hindered.

In the edges 108 between and around the insert openings 109 of the holders 101, additional gas holes 111 may be provided. This contribute to gases and/or moisture being able to flow through the tray 100, as it were. Such additional holes 111 are particularly favorable to ensure that gases which are supplied to a first tray 110 with flowers in plugs 104 are fed through to a second tray 100 with flowers in plugs 104, so that multiple trays 100 can benefit from the supplied gases. In a practical embodiment, for instance, relatively warm air is supplied onto and/or under a first tray 1, while, through the holes 111, the air can then also reach the flowers and/or roots or flowers in a second tray, which is favorable to the growth of the flowers.

The tray 100 is preferably suitable to be manufactured by means of deep-drawing, the openings 103 being formed during or after deep-drawing, for instance after deep-drawing by means of cutting into the openings 103, for instance by means of punching, while, due to irregularities in the bottom of the holder 101, a relief will form in the edge 107 of the opening 103. Optionally, a rib 5 as described hereinabove may be used in the bottom.

The variations described and many similar variations, as well as combinations thereof, are understood to fall within the framework of the invention set forth in the claims. Of course, different aspects of different embodiments and/or combinations thereof can be combined with one another and be exchanged. So, delimitation should not be restricted to only the embodiments mentioned.

## Claims

1. A flower pot (1) which is manufactured at least partly from plastic, provided with at least one upstanding wall (2) and a bottom (3), wherein the bottom is provided with at least one rib (5), wherein the at least one rib extends over a center part (4) of the bottom, **characterized in that** the rib has a curve over the length of the rib in the direction of the opening of the pot, so that the two ends of the rib are lower than a center part thereof.

2. A flower pot according to claim 1, wherein the at least one rib (5) extends over virtually the whole bottom (3), from wall to wall.

3. Dower pot according to claim 1 or 2, wherein the at least one rib (5) is 3. A flower pot according to claim 1 or 2, wherein the at least one rib is free of crossing second ribs (6).

4. A flower pot according to any one of the preceding claims, wherein only one rib (5) crossing the center part (4) is provided.

5. A flower pot according to any one of the preceding claims, wherein the rib (5) has a channel shape.

6. A flower pot according to any one of the preceding claims, wherein the pot (1) is deep-drawn.

7. A flower pot according to any one of the preceding claims, wherein the highest point of the curve is approximately near or in the center (4) of the bottom (3).

8. A flower pot according to any one of the preceding claims, wherein the bottom (3) has a curve which is convex in the direction of the opening of the pot (1).

9. A flower pot according to any one of the preceding claims, wherein the bottom (3) provided with gas openings (7).

10. A flower pot according to claim 9, wherein the gas openings (7) are at mutually different height levels.

11. A flower pot according to any one of the preceding claims, wherein the at least one rib (5) extends through the center (4).

12. A method of forming a flower pot (1), wherein the pot is deep-drawn, and wherein, in deep-drawing, a rib (5) is formed over a center part (4) of the bottom (3) of the pot, **characterized in that** the rib has a curve over the length of the rib in the direction of the opening of the pot, so that the two ends of the rib are lower than a center part thereof.

## Patentansprüche

1. Blumentopf (1), der mindestens teilweise aus Kunststoff hergestellt ist, versehen mit mindestens einer aufrechten Wand (2) und einem Boden (3), wobei der Boden mit mindestens einer Rippe (5) versehen ist, wobei sich die mindestens eine Rippe über einen mittleren Teil (4) des Bodens erstreckt, **dadurch gekennzeichnet, dass** die Rippe eine Krümmung über die Länge der Rippe zur Öffnung des Topfs hin aufweist, sodass die zwei Enden der Rippe niedriger sind als ein mittleres Teil davon.

2. Blumentopf nach Anspruch 1, wobei sich die mindestens eine Rippe (5) über fast den ganzen Boden (3) von Wand zu Wand erstreckt.

3. Blumentopf nach Anspruch 1 oder 2, wobei die mindestens eine Rippe (5) frei von kreuzenden zweiten Rippen (6) ist.

4. Blumentopf nach einem der vorhergehenden Ansprüche, wobei nur eine Rippe (5), die den mittleren Teil (4) kreuzt, vorgesehen ist.

5. Blumentopf nach einem der vorhergehenden Ansprüche, wobei die Rippe (5) kanalförmig ist.

6. Blumentopf nach einem der vorhergehenden Ansprüche, wobei der Topf (1) tiefgezogen ist.

7. Blumentopf nach einem der vorhergehenden Ansprüche, wobei der höchste Punkt der Krümmung ungefähr nahe der oder in der Mitte (4) des Bodens (3) ist.

8. Blumentopf nach einem der vorhergehenden Ansprüche, wobei der Boden (3) eine Krümmung aufweist, die zur Öffnung des Topfs (1) hin konvex ist.

9. Blumentopf nach einem der vorhergehenden Ansprüche, wobei der Boden (3) mit Gasöffnungen (7) versehen ist.

10. Blumentopf nach Anspruch 9, wobei die Gasöffnungen (7) auf zueinander verschiedenen Höhenniveaus sind.

11. Blumentopf nach einem der vorhergehenden Ansprüche, wobei sich die mindestens eine Rippe (5) durch die Mitte (4) erstreckt.

12. Verfahren zum Formen eines Blumentopfes (1), wobei der Topf tiefgezogen ist, und wobei beim Tiefziehen eine Rippe (5) über einem mittleren Teil (4) des Bodens (3) des Topfes ausgebildet wird, **dadurch gekennzeichnet, dass** die Rippe eine Krümmung über die Länge der Rippe zur Öffnung des Topfs hin aufweist, so dass die zwei Enden der Rippe niedriger sind als ein mittlerer Teil davon.

## Revendications

1. Pot de fleur (1) qui est fabriqué au moins partiellement à partir de plastique, prévu avec au moins une paroi droite (2) et un fond (3) ; dans lequel le fond est prévu avec au moins une nervure (5), dans lequel la au moins une nervure s'étend sur une partie centrale (4) du fond, **caractérisé en ce que** la nervure a une courbure sur la longueur de la nervure dans une direction d'ouverture du pot de sorte que les deux extrémités de la nervure sont plus basses que sa partie centrale.

2. Pot de fleur selon la revendication 1, dans lequel la au moins une nervure (5) s'étend pratiquement sur tout le fond (3), d'une paroi à l'autre.

3. Pot de fleur selon la revendication 1 ou 2, dans lequel la au moins une nervure (5) est dépourvue de secondes nervures traversantes (6).

4. Pot de fleur selon l'une quelconque des revendications précédentes, dans lequel on prévoit une seule nervure (5) traversant la partie centrale (4).

5. Pot de fleur selon l'une quelconque des revendications précédentes, dans lequel la nervure (5) a une forme de canal.

6. Pot de fleur selon l'une quelconque des revendications précédentes, dans lequel le pot (1) est embouti.

7. Pot de fleur selon l'une quelconque des revendications précédentes, dans lequel le point le plus haut de la courbe est approximativement à côté de ou au centre (4) du fond (3).

8. Pot de fleur selon l'une quelconque des revendications précédentes, dans lequel le fond (3) a une courbure qui est convexe dans la direction de l'ouverture du pot (1).

9. Pot de fleur selon l'une quelconque des revendications précédentes, dans lequel le fond (3) est prévu avec des ouvertures de gaz (7).

10. Pot de fleur selon la revendication 9, dans lequel les ouvertures de gaz (7) sont à des niveaux de hauteur mutuellement différents.

11. Pot de fleur selon l'une quelconque des revendications précédentes, dans lequel la au moins une nervure (5) s'étend à travers le centre (4).

12. Procédé pour former un pot de fleur (1), dans lequel le pot est embouti, et dans lequel, lors de l'emboutissage, une nervure (5) est formée sur une partie centrale (4) du fond (3) du pot, **caractérisé en ce que** la nervure a une courbure sur la longueur de la nervure dans la direction de l'ouverture du pot, de sorte que les deux extrémités de la nervure sont plus basses que sa partie centrale.
